# EUROPEAN PATENT APPLICATION

(11) **EP 2 706 468 A1**
(43) Date of publication of application: **12.03.2014**
(21) Application number: 12871750.1
(22) Date of filing: 18.04.2012
(51) Int. Cl.: G06F 17/30

(54) **DATA STORAGE AND QUERY METHOD**

(30) Priority: 20.03.2012 CN 201210073327
(71) Applicant: Guangdong Electronics Industry Institute Ltd., Dongguan, Guangdong 523808 (CN)
(72) Inventor: NIE, Lei, Dongguan Guangdong 523808 (CN); XU, Zhiwei, Dongguan Guangdong 523808 (CN); LI, Guojie, Dongguan Guangdong 523808 (CN); LIU, Jingjie, Dongguan Guangdong 523808 (CN); YUE, Qiang, Dongguan Guangdong 523808 (CN)
(74) Representative: Hocking, Adrian Niall
(86) International application number: PCT/CN2012/000534
(87) International publication number: WO 2013/138953

(57) **Abstract**

Disclosed is a data storage and query method which supports rapid development and horizontal scaling in the technical field of computer applications. The method comprises: abstracting data into a tuple (Key, MiniTable), and identifYing any MiniTable (removing data sets) by means of a unique Key; forming the MiniTable by a plurality of data lines, limiting the structure of the data lines by means of a predefined pattern, and ranking the lines according to a master key defined by the pattern; and obtaining the horizontal scaling capability of the system using a method of removing the dependency among the data sets, and at the same time retaining the dependency among the interior data of the data sets to support an SQL-class-\ grammar, thereby obtaining the characteristic of rapid development. The method can be applied to support the horizontal scaling pattern of big data and support a data management system in a rapid development pattern with a short development cycle.

## Description

### Technical Field

The present invention relates to the field of computer application technology. In particular, it relates to a data storage and query method, which supports rapid development and horizontal scaling.

### Background Art

With the rapid development of the Internet, in particular the emergence of Online Social Networks, Online Social Media and other new Web 2.0 services, the Internet industry has made two critical challenges to the data management system.
1. Data on the Internet has been growing exponentially, which has been termed as "Big Data" in the industry. Such Big Data have brought tremendous pressure to the current vertical scaling data management system. The data management system has become the bottleneck of a large number of Internet service systems.
2. The services of the Internet industry are characterized by rapid changes and short product development cycle. This is particularly true for the social networks, whose product development cycles are measured by days. As a fundamental constituent of the Internet industry products, the data management system must support the mode of rapid development in order to reduce development cycles of products.

Therefore, the data management system that satisfies both the horizontal scaling mode that supports big data and the rapid development mode that supports short development cycle becomes the key for building the Internet service system.

Up to now, there are mainly two major categories of data management technology, which support the horizontal scaling mode.
1. Key - Value Store. In this technology, data have been abstracted into a two-dimensional vector (Key, Value). Key is the unique identifier for data storage and query; while value is the data content that a particular Key is corresponding to. Key - Value Store comprises three basic primitives. Boolean Put (Key, Value): Saving (Key, Value), if the saving succeeds, then returning True, if the saving fails then returning False. Boolean Del (Key): deleting (Key, Value), if the deleting succeeds, then returning True, if the deleting fails or no corresponding Key existing, then returning False. String Get (Key), acquiring the Value corresponding to a Key, if it fails or no corresponding Key existing then returning NULL. Due to the fact that there is no dependency relationship between any two (Key, Value) pairs, the horizontal scaling of such Key - Value Store can be achieved by taking advantage of consistent hashing or B+ tree.
2. Key - Row Store (or referred to as Big Table). In this technology, data have been abstracted into a nested n = 1 dimensional vector (Key, (SubKey 1, Value 1), (SubKey 2, Value 2), ...... (SubKey n, Value n)). Key is the unique identifier for data storage and query. Each data line comprises multiple data. And the corresponding Value is acquired through the SubKey. Key - Row Store comprises five basic primitives. Boolean Put (Key, SubKey, Value); adding (SubKey, Value) into the data line that is corresponding to a Key, if saving succeeds then returning True, if the saving fails then returning False. Boolean Del(Key): deleting the data line that is corresponding to a Key, if the deleting succeeds then returning True, if the deleting fails or no corresponding Key existing then returning False. Boolean Del (SubKey): deleting the (SubKey, Value) in the data line corresponding to a Key, if the deleting succeeds then returning True, if the deleting fails or no corresponding Key or SubKey existing then returning False. String Get(Key), acquiring the data line corresponding to a Key, if it fails or no corresponding Key existing then returning NULL. String Get(Key, SubKey), acquiring the Value corresponding to a SubKey in a data line corresponding to a Key, if it fails or no corresponding Key or SubKey existing then returning NULL. Similar to the Key - Value Store, there is no dependency relationship between two data lines. Therefore, the horizontal scaling of the Key - Row Store can also be achieved by taking advantage of consistent hashing or B+ tree.

Albeit it is true that the two foregoing technologies support the mode of horizontal scaling, and thus meet the Internet industry's first challenge to the data management system, both of these two technologies can only provide simple primitives. It is also difficult for these primitives to quickly build up applications with complex logic. Therefore, they do not support the mode of rapid development, and thus fail to meet the Internet industry's second challenge to the data management system.

Currently, due to the advantages of its uniform standard, rich semantics and simple structure, SQL language becomes the major language that enable the data management system to support the mode of rapid development. However, being compatible with the SQL language would generate inter-dependency between the data, which may strip its property of horizontal scaling. In view of the foregoing, the currently available relational databases which are compatible with the SQL language can only rely on vertical scaling, and thus fail to meet the challenge of Internet Big Data.

### Summary of Invention

The technical problem that the present invention is aimed to solve is to provide a data storage and query method, wherein the data storage comprises creating data and updating data. The present method satisfies the feature of horizontal scaling, and at the same time, supports the SQL-class syntax, which makes it more suitable for the mode of rapid development.

In the present invention, the technical solution to solve the aforementioned technical problem is:
abstracting data into a tuple (Key, MiniTable), and identifying any MiniTable (removing data sets) by means of a unique Key; forming the MiniTable by a plurality of data lines, limiting the structure of the data lines by means of a predefined pattern, and ranking the lines according to a master key defined by the pattern;
Key-MiniTable pattern comprises three basic primitives and three physical entities. The three physical entities are, respectively:
Client, initiating a request to a Key Server by means of the three basic primitives, and receiving the result of request as well;
Key Server, receiving the request sent by the Client, querying IP address and Port number of the MiniTable Server where the MiniTable corresponding to the Key is at, and based on it, forwarding the request to the corresponding MiniTable Server;
MiniTable Server, receiving the request forwarded by the Key Server, parsing the SQL-class statement in said request, generating an implementation plan, as well as acquiring and writing data into a distributed storage system, finishing the request and returning result to the Client.

The three basic primitives of the Key-MiniTable pattern are:
1) Boolean Create (Key, Column Name 1: Data Type, Column Name 2: Data Type, ... , Column Name n: Data Type, PRIMARY KEY: Column Name), creating a MiniTable whose identifier is Key, and defining pattern of the MiniTable; if the creating succeeds then returning True, if the creating fails then returning False;
2) Boolean Delete (Key), deleting the MiniTable corresponding to the Key, if the deleting succeeds then returning True, if the deleting fails or no corresponding Key existing then returning False;
3) String Query (Key, SQL-class statement), executing a SQL-class statement within the MiniTable corresponding to the Key, Querying primitive and then returning the return value of SQL-class statement in its parameters; the SQL-class statement comprising ten reserved words: Select, Where, Insert, Update, Delete, Order By, Limit, Distinct, And, Or; and six operators: =, >, >=, <=, <, <>; the syntax and semantics of the reserved words and operators are the same as their standard definitions in SQL.

The size of each MiniTable is limited, which is generally smaller than or equal to 64 M, such that make it easy to place the entire MiniTable into a data block of the Hadoop distributed file system; the join and other inter-table operations of the relational database can not be performed between two different MiniTables, it is not necessary to perform joint locking for multiple tables; Key is not only the identifier of the MiniTable, but also the identifier of storage location for the MiniTable in the distributed storage system.

MiniTable adopts a log format to record data, adding data, deleting data and modifying data are all written into the log at the end of the file; when the size of a MiniTable is close to the max capacity of the data block, the log merge would be performed to generate a new log file; prior to performing any operation, both the Key Server and the MiniTable Server write that operation into the system log file, and when the operation is finished or failed, the return value is also written into the system log file.

Key server comprises three core data structures:
1) B+ Tree: storing the corresponding relationship between a Key and its address number;
2) Address Conversion Table: storing the corresponding relationship between the address number and an IP address as well as a Port number;
3) MiniTable Server Monitoring Table: storing each address number's corresponding MiniTable Server loading condition;

When the Key Server receiving a primitive request, first checking whether such request is a valid Query primitive; if it is a valid Query primitive, then querying the address number corresponding to the Key from the B+ Tree; if the Key does not exist, then returning the information that the Key does not exist; if the Key does exist, then querying the IP address and Port number corresponding to the address number from the Address Conversion Table; if the IP address and Port number do not exist, then returning an error; if they do exist, then forwarding the request to the MiniTable Server that is corresponding to the IP address and the Port number;

If the request is not a valid Query primitive, then check whether it is a valid Create primitive; if it is a valid Create primitive, then querying whether a given Key existing in the B+ Tree; if such a key does exist, then returning the information that the Key already exists; if such a key does not exist, then assigning an address number according to scheduling algorithm and the MiniTable Server Monitoring Table, updating the MiniTable Server Monitoring Table, then using that address number to query the corresponding IP address and Port number, as well as forwarding that request to the corresponding MiniTable Server;

If the request is not a valid Create primitive, then check whether it is a valid Delete primitive; if it is a valid Delete primitive, then querying whether a given Key existing in the B+ Tree; if such a key does not exist, then returning the information that the Key does not exist; if such a key does exist, then in the Address Conversion Table querying the IP address and Port number corresponding to the address number, as well as deleting the corresponding Key in the B+ Tree, and then updating the MiniTable Server Monitoring Table, querying the IP address and Port number, and forwarding the request to the corresponding MiniTable Server.

The MiniTable Server comprises two core data structures:
1) Memory Table: according to the caching strategy, a part of the MiniTable has been stored in the memory;
2) MiniTable Lock: recording the locked MiniTable;

When the MiniTable server receiving a request forwarded by the Key Server, it firstly conducting semantic parsing to the request, determining whether the MiniTable requested to operate is locked; if locked, then adding the request to the waiting list; if not locked, then locking the MiniTable, then generating an implementation plan; next, determining whether the MiniTable being in the Memory Table, if it is in the Memory Table, then executing the request directly; if it is not in the Memory Table, then further determining whether there is enough memory space available; if there is not, then according to the scheduling strategy, writing a part of the MiniTable into the distributed file system; the difference between the MiniTable memory version and its file version is compared during the writing, and only writing in the updated part in the compressed log format; after obtaining enough memory space, reading in the MiniTable file from the distributed file system, then decompressing it; then converting the MiniTable log file into the data format and then storing it into the Memory Table; then executing the request, unlocking the MiniTable, and returning the result.

The present invention is able to build up a data management system to support data storage (comprising creating and updating) and query, and said system satisfies the two important properties set forth below. 1) Rapid Development: the operation to the data within the MiniTable supports SQL-class syntax, thereby it can quickly implement complex logic query and complex condition insert. 2) Horizontal Scaling: via the Key - MiniTable pattern, removing the dependency relationship among the MiniTables; thereby it can, via increasing the quantity of servers, expand system's capacity and throughput in a quasi-linear manner, so as to support the MiniTable that is at the magnitude of hundred millions and the request that is at the level of one hundred thousand per second.

### Description of the Drawings

In reference to the accompanying drawings, the present invention will be further described below:
FIG. 1 is an illustration of the structure of the Key - MiniTable system of the present invention;
FIG. 2 is a flow chart of the Key Server implementation;
FIG. 3 is a flow chart of the MiniTable Server implementation.

### Description of Embodiments

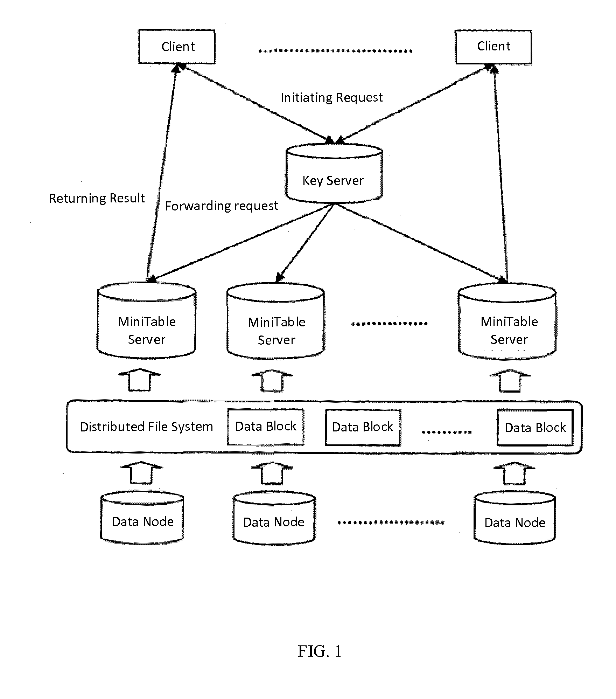

As shown in FIG. 1, it is the structural view of the Key - MiniTable system. The Key - MiniTable system has been built up based on the distributed file system, for example, the Hadoop distributed file system (HDFS). The data that have been stored into the distributed file system can be divided into two parts:
1, MiniTable log file: MiniTable has been stored in data block. In order to improve the accessing and caching performances, data size of the MiniTable does not exceed the max capacity of the data block (usually being 64 M). In order to improve its writing performance, MiniTable adopts the log format to record data; addition, deletion and modification of data are all written in the log at the end of the file. When the size of the MiniTable file is close to the max capacity of the data block, the log merge will be executed, to generate a new log file.
2, System log file: when they perform any operation, both the Key Server and the MiniTable Server write the operation into the system log file, when the operation is completed or failed, the return value will also be written into the system log file. The system log file has been maintained such that when a system failure occurs, it can be restored to the prior normal status.

When need to create, update or delete data, users use the Client to initiate a primitive request to the Key Server.

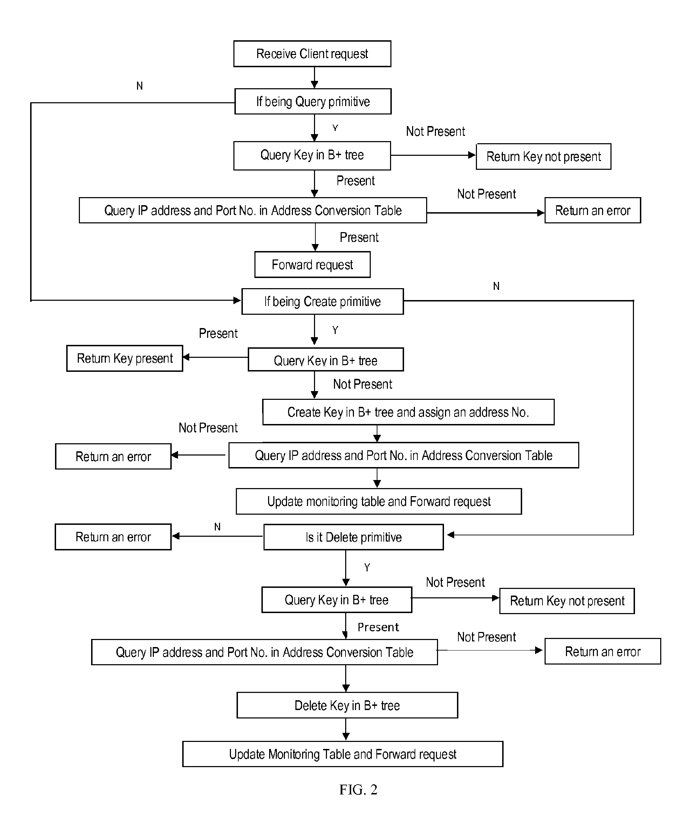

The implementation flow chart of the Key Server has been shown in the FIG. 2. The Key Server has three core data structures:
1) B+ Tree: stores the corresponding relationship between a Key and its address number.
2) Address Conversion Table: stores the corresponding relationship between the address number and an IP address as well as a Port number.
3) MiniTable Server Monitoring Table: stores each address number's corresponding MiniTable Server loading condition.

When the Key Server receives a primitive request, it firstly checks whether such request is a valid Query primitive; if it is a valid Query primitive, then from the B+ Tree queries the address number corresponding to the Key; if the Key does not exist, then returns the information that the Key does not exist; if the Key does exist, then from the Address Conversion Table queries the IP address and Port number corresponding to the address number; if the IP address and Port number do not exist, then returns an error; if they do exist, then forwards the request to the MiniTable Server that is corresponding to the IP address and Port number.

If the request is not a valid Query primitive, then check whether it is a valid Create primitive; if it is a valid Create primitive, then queries whether a given Key exists in the B+ Tree; if such a key does exist, then returns the information that the Key already exists; if such a key does not exist, then assigns an address number according to scheduling algorithm and the MiniTable Server Monitoring Table, updates the MiniTable Server Monitoring Table, then uses the address number to query the corresponding IP address and Port number, as well as forwards the request to the corresponding MiniTable Server.

If such request is not a valid Create primitive, then check whether it is a valid Delete primitive; if it is a valid Delete primitive, then queries whether a given Key exists in the B+ Tree; if such a key does not exist, then returns the information that the Key does not exist; if such a key does exist, then in the Address Conversion Table queries the IP address and Port number corresponding to the address number, as well as deletes the corresponding Key in the B+ Tree, and updates the MiniTable Server Monitoring Table, queries the IP address and Port number, and forwards the request to the corresponding MiniTable Server.

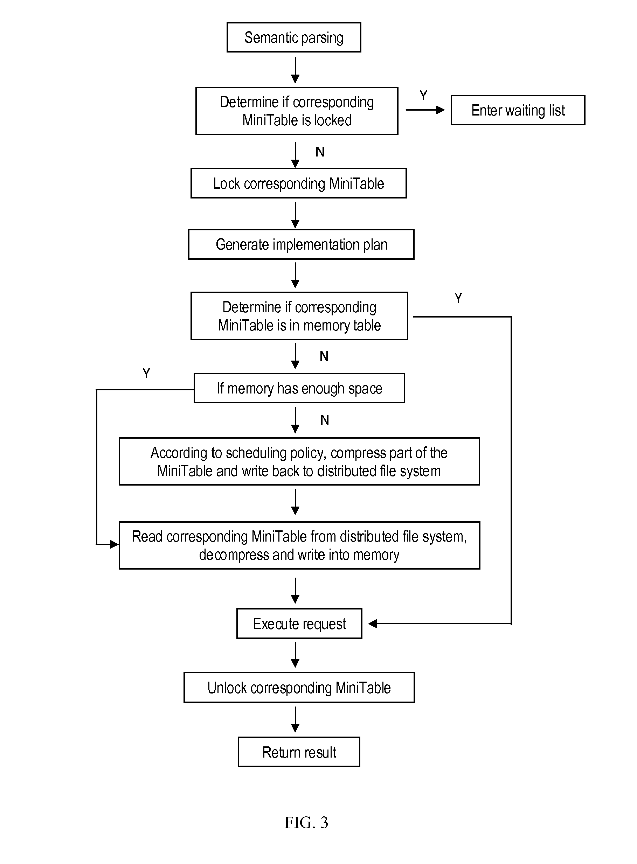

As shown in FIG. 3, it is the implementation flow chart of the MiniTable Server.

MiniTable Server contains two core data structures:
1) Memory Table: according to the caching strategy, a part of the MiniTable has been stored into the memory.
2) MiniTable Lock: records the locked MiniTable.

When the MiniTable server receives a request forwarded by the Key Server, it firstly conducts semantic parsing to the request, and determine whether the MiniTable requested to operate with is locked. If it is locked, then add the request to the waiting list. If it is not locked, then locks the MiniTable, and then generates an implementation plan. Next, determines whether the MiniTable is in the Memory Table, if it is in the Memory Table, then executes the request directly. If it is not in the Memory Table, then further determines whether there is enough memory space available. If there is not, then according to the scheduling strategy, writes a part of the MiniTable into the distributed file system. The difference between the MiniTable memory version and its file version is compared during the writing, and only writes in the updated part in the compressed log format; after obtaines enough memory space, reads in the MiniTable file from the distributed file system, then decompresses it. Then converts the MiniTable log file into the data format, and then stores it into the Memory Table. Next executes the request, unlocks the MiniTable, and returns the result.

The present invention utilizes the method of removing the dependency relationship among the data sets to obtain the horizontal scaling capability of the system, and at the same time retaining the dependency relationship among the data within the data sets to support the SQL-class syntax, thereby obtaining the characteristic of rapid development.

## Claims

1. A data storage and query method that supports rapid development and horizontal scaling, **characterized by**: abstracting data into a tuple (Key, MiniTable), and identifying any MiniTable (removing data sets) by means of a unique Key; forming the MiniTable by a plurality of data lines, limiting the structure of the data lines by means of a predefined pattern, and ranking the lines according to a master key defined by the pattern;
Key-MiniTable pattern comprising three basic primitives and three physical entities, the three physical entities being, respectively:
Client, initiating a request to a Key Server by means of the three basic primitives, as well as receiving a result of request;
Key Server, receiving the request sent by the Client, querying IP address and Port number of the MiniTable Server where the MiniTable corresponding to the Key is at, and based on it, forwarding the request to the corresponding MiniTable Server;
MiniTable Server, receiving the request forwarded by the Key Server, parsing the SQL-class statement, generating an implementation plan, as well as acquiring and writing data into a distributed storage system, finishing the request and returning result to the Client.

2. A data storage and query method as set forth in claim 1, **characterized by**: the three basic primitives of the Key-MiniTable pattern being:
1) Boolean Create (Key, Column Name 1: Data Type, Column Name 2: Data Type, ... , Column Name n: Data Type, PRIMARY KEY: Column Name), creating a MiniTable whose identifier is Key, and defining pattern of the MiniTable; if the creating succeeds then returning True, if the creating fails then returning False;
2) Boolean Delete (Key), deleting the MiniTable corresponding to the Key, if the deleting succeeds then returning True, if the deleting fails or no corresponding Key existing then returning False;
3) String Query (Key, SQL-class statement), executing a SQL-class statement within the MiniTable corresponding to the Key, Querying primitive and then returning the return value of SQL-class statement in its parameters; the SQL-class statement comprising ten reserved words: Select, Where, Insert, Update, Delete, Order By, Limit, Distinct, And, Or; and six operators: =, >, >=, <=, <, <>; the syntax and semantics of the reserved words and operators are the same as their standard definitions in SQL.

3. A data storage and query method as set forth in claim 1, **characterized by**: the size of each MiniTable being limited, which is generally smaller than or equal to 64 M, thus enabling placing the entire MiniTable into a data block of the Hadoop distributed file system; the join and other inter-table operations of the relational database can not be performed between two different MiniTables, negating the need to perform joint locking for multiple tables; the Key is not only the identifier of the MiniTable identity, but also the storage location identifier of the MiniTable in the distributed storage system.

4. A data storage and query method as set forth in claim 2, **characterized by**: the Size of each MiniTable being limited, which is generally smaller than or equal to 64 M, thus enabling placing the entire MiniTable into a data block of the Hadoop distributed file system; the join and other inter-table operations of the relational database can not be performed between two different MiniTables, negating the need to perform joint locking for multiple tables; Key is not only the identifier of the MiniTable identity, but also the storage location identifier of the MiniTable in the distributed storage system.

5. A data storage and query method as set forth in any one of claims 1 - 4, **characterized by**: the MiniTable adopting a log format to record data, adding data, deleting data and modifying data being all written into the log at the end of the file; when the size of the MiniTable being close to the max capacity of the data block, a log merge would be performed to generate a new log file; prior to performing any operation, both the Key Server and the MiniTable server writing the operation into a system log file, and when the operation is finished or failed, the return value being also written into the system log file.

6. A data storage and query method as set forth in any one of claims 1 - 4, **characterized by**: the Key server comprising three core data structures:
1) B+ Tree: storing the corresponding relationship between a Key and its address number;
2) Address Conversion Table: storing the corresponding relationship between the address number and an IP address as well as a Port number;
3) MiniTable Server Monitoring Table: storing each address number's corresponding MiniTable Server loading condition;
when the Key Server receiving a primitive request, first checking whether such request is a valid Query primitive; if it is a valid Query primitive, then querying the address number corresponding to the Key from the B+ Tree; if the Key does not exist, then returning the information that the Key does not exist; if the Key does exist, then querying the IP address and Port number corresponding to the address number from the Address Conversion Table; if the IP address and Port number do not exist, then returning an error; if they do exist, then forwarding the request to the MiniTable Server that is corresponding to the IP address and the Port number;
if the request is not a valid Query primitive, then checking whether it is a valid Create primitive; if it is a valid Create primitive, then querying whether a given Key existing in the B+ Tree; if such a key does exist, then returning the information that the Key already exists; if such a key does not exist, then assigning an address number according to scheduling algorithm and the MiniTable Server Monitoring Table, updating the MiniTable Server Monitoring Table, then using that address number to query the corresponding IP address and Port number, as well as forwarding that request to the corresponding MiniTable Server;
if the request is not a valid Create primitive, then checking whether it is a valid Delete primitive; if it is a valid Delete primitive, then querying whether a given Key existing in the B+ Tree; if such a key does not exist, then returning the information that the Key does not exist; if such a key does exist, then in the Address Conversion Table querying the IP address and Port number corresponding to the address number, as well as deleting the corresponding Key in the B+ Tree, and then updating the MiniTable Server Monitoring Table, querying the IP address and Port number, and forwarding the request to the corresponding MiniTable Server.

7. A data storage and query method as set forth in claim 5, **characterized by**: the Key server comprising three core data structures:
1) B+ Tree: storing the corresponding relationship between a Key and its address number;
2) Address Conversion Table: storing the corresponding relationship between the address number and an IP address as well as a Port number;
3) MiniTable Server Monitoring Table: storing each address number's corresponding MiniTable Server loading condition;
when the Key Server receiving a primitive request, first checking whether such request is a valid Query primitive; if it is a valid Query primitive, then querying the address number corresponding to the Key from the B+ Tree; if the Key does not exist, then returning the information that the Key does not exist; if the Key does exist, then querying the IP address and Port number corresponding to the address number from the Address Conversion Table; if the IP address and Port number do not exist, then returning an error; if they do exist, then forwarding the request to the MiniTable Server that is corresponding to the IP address and the Port number;
if the request is not a valid Query primitive, then checking whether it is a valid Create primitive; if it is a valid Create primitive, then querying whether a given Key existing in the B+ Tree; if such a key does exist, then returning the information that the Key already exists; if such a key does not exist, then assigning an address number according to scheduling algorithm and the MiniTable Server Monitoring Table, updating the MiniTable Server Monitoring Table, then using that address number to query the corresponding IP address and Port number, as well as forwarding that request to the corresponding MiniTable Server;
if the request is not a valid Create primitive, then checking whether it is a valid Delete primitive; if it is a valid Delete primitive, then querying whether a given Key existing in the B+ Tree; if such a key does not exist, then returning the information that the Key does not exist; if such a key does exist, then in the Address Conversion Table querying the IP address and Port number corresponding to the address number, as well as deleting the corresponding Key in the B+ Tree, and then updating the MiniTable Server Monitoring Table, querying the IP address and Port number, and forwarding the request to the corresponding MiniTable Server.

8. A data storage and query method as set forth in any one of claims 1 - 4, **characterized by**: the MiniTable Server comprising two core data structures:
1) Memory Table: according to the caching strategy, a part of the MiniTable has been stored in the memory;
2) MiniTable Lock: recording the locked MiniTable;
when the MiniTable server receiving a request forwarded by the Key Server, it firstly conducting semantic parsing to the request, determining whether the MiniTable requested to operate is locked; if locked, then adding the request to the waiting list; if not locked, then locking the MiniTable, then generating an implementation plan; next, determining whether the MiniTable is in the Memory Table, if it is in the Memory Table, then executing the request directly; if it is not in the Memory Table, then further determining whether there is enough memory space available; if there is not, then according to the scheduling strategy, writing a part of the MiniTable into the distributed file system; the difference between the MiniTable memory version and its file version is compared during the writing, and only writing in the updated part in the compressed log format; after obtaining enough memory space, reading in the MiniTable file from the distributed file system, then decompressing it; then converting the MiniTable log file into the data format and then storing it into the Memory Table; then executing the request, unlocking the MiniTable, and returning the result.

9. A data storage and query method as set forth in claim 5, **characterized by**: the MiniTable Server comprising two core data structures:
1) Memory Table: according to the caching strategy, a part of the MiniTable has been stored in the memory;
2) MiniTable Lock: recording the locked MiniTable;
when the MiniTable server receiving a request forwarded by the Key Server, it firstly conducting semantic parsing to the request, determining whether the MiniTable request to operate is locked; if locked, then adding the request to the waiting list; if not locked, then locking the MiniTable, then generating an implementation plan; next, determining whether the MiniTable is in the Memory Table, if it is in the Memory Table, then executing the request directly; if it is not in the Memory Table, then further determining whether there is enough memory space available; if there is not, then according to the scheduling strategy, writing a part of the MiniTable into the distributed file system; the difference between the MiniTable memory version and its file version is compared during the writing, and only writing in the updated part in the compressed log format; after obtaining enough memory space, reading in the MiniTable file from the distributed file system, then decompressing it; then converting the MiniTable log file into the data format and then storing it into the Memory Table; then executing the request, unlocking the MiniTable, and returning the result.

10. A data storage and query method as set forth in claim 6, **characterized by**: the MiniTable Server comprising two core data structures:
1) Memory Table: according to the caching strategy, a part of the MiniTable has been stored in the memory;
2) MiniTable Lock: recording the locked MiniTable;
when the MiniTable server receiving a request forwarded by the Key Server, it firstly conducting semantic parsing to the request, determining whether the MiniTable requested to operate is locked; if locked, then adding the request to the waiting list; if not locked, then locking the MiniTable, then generating an implementation plan; next, determining whether the MiniTable is in the Memory Table, if it is in the Memory Table, then executing the request directly; if it is not in the Memory Table, then further determining whether there is enough memory space available; if there is not, then according to the scheduling strategy, writing a part of the MiniTable into the distributed file system; the difference between the MiniTable memory version and its file version is compared during the writing, and only writing in the updated part in the compressed log format; after obtaining enough memory space, reading in the MiniTable file from the distributed file system, then decompressing it; then converting the MiniTable log file into the data format and then storing it into the Memory Table; then executing the request, unlocking the MiniTable, and returning the result.

11. A data storage and query method as set forth in claim 7, **characterized by**: the MiniTable Server comprising two core data structures:
1) Memory Table: according to the caching strategy, a part of the MiniTable has been stored in the memory;
2) MiniTable Lock: recording the locked MiniTable;
when the MiniTable server receiving a request forwarded by the Key Server, it firstly conducting semantic parsing to the request, determining whether the MiniTable requested to operate is locked; if locked, then adding the request to the waiting list; if not locked, then locking the MiniTable, then generating an implementation plan; next, determining whether the MiniTable is in the Memory Table, if it is in the Memory Table, then executing the request directly; if it being not in the Memory Table, then further determining whether there is enough memory space available; if there is not, then according to the scheduling strategy, writing a part of the MiniTable into the distributed file system; the difference between the MiniTable memory version and its file version is compared during the writing, and only writing in the updated part in the compressed log format; after obtaining enough memory space, reading in the MiniTable file from the distributed file system, then decompressing it; then converting the MiniTable log file into the data format and then storing it into the Memory Table; then executing the request, unlocking the MiniTable, and returning the result.
